(19) Europäisches Patentamt
European Patent Office
Office européen des brevets

(11) EP 3 098 941 A1

(12) **EUROPEAN PATENT APPLICATION**
published in accordance with Art. 153(4) EPC

(43) Date of publication:
**30.11.2016 Bulletin 2016/48**

(21) Application number: **15739904.9**

(22) Date of filing: **21.01.2015**

(51) Int Cl.:
*H02K 1/27* $^{(2006.01)}$    *H02K 1/22* $^{(2006.01)}$
*H02K 1/28* $^{(2006.01)}$

(86) International application number:
**PCT/JP2015/051551**

(87) International publication number:
**WO 2015/111625 (30.07.2015 Gazette 2015/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.01.2014   JP 2014009855**
               **05.06.2014   JP 2014117112**

(71) Applicant: **NSK Ltd.**
**Tokyo 141-8560 (JP)**

(72) Inventors:
• **KIKUCHI, Yusuke**
  **Fujisawa-shi**
  **Kanagawa 251-8501 (JP)**

• **KIMURA, Gen**
  **Fujisawa-shi**
  **Kanagawa 251-8501 (JP)**
• **TU, Zhipeng**
  **Fujisawa-shi**
  **Kanagawa 251-8501 (JP)**

(74) Representative: **Schwabe - Sandmair - Marx**
**Patentanwälte Rechtsanwalt**
**Partnerschaft mbB**
**Joseph-Wild-Straße 20**
**81829 München (DE)**

(54) **ELECTRIC MOTOR, ELECTRIC POWER STEERING DEVICE, AND VEHICLE**

(57)     A motor 10 includes a motor rotor 20 and a motor stator 30. An outer circumference of a rotor yoke 22 includes a convex portion 22q projecting outward in a radial direction of the rotor yoke 22 and a concave portion 22d between the convex portions 22q adjacent to each other in a circumferential direction. A magnet 23 is arranged on an adhering surface 22a that is a surface of the concave portion 22d, and the convex portion 22q includes at least one of magnetic gaps g1 and g2 that penetrates through the rotor yoke 22 in the axial direction and that has magnetic permeability lower than that of the rotor yoke 22.

FIG.4

EP 3 098 941 A1

## Description

Field

The present invention relates to a motor, an electric power steering device, and a vehicle.

Background

For example, Patent Literature 1 discloses a permanent magnet embedded motor, or a so-called IPM (interior permanent magnet) motor, having a structure in which a permanent magnet is embedded in a rotor that uses torque obtained by adding magnet torque to reluctance torque smaller than the magnet torque.

Citation List

Patent Literature

Patent Literature 1: Japanese Laid-open Patent Publication No. 8-331783

Summary

Technical Problem

In recent years, there is an increase in demand for a motor that uses fewer magnets or a motor in which rare-earth magnetic components of the magnet are decreased. In the motor that uses the fewer magnets or the motor in which the rare-earth magnetic components of the magnet are decreased, magnet torque generated by the magnet also decreases. Therefore, reluctance torque is desirably used to supplement the magnet torque decreased in accordance with reduction in the number of used magnets or rare-earth components in a SPM (surface permanent magnet) motor that is obtained by adhering the magnet on a surface of the rotor.

The present invention has been made in view of the above and is directed to providing a motor including a plurality of magnets arranged on an outer circumference of a rotor yoke in a circumferential direction thereof and capable of utilizing the reluctance torque by improving a salient pole ratio that is a ratio between d-axis inductance and q-axis inductance, an electric power steering device, and a vehicle.

Solution to Problem

According to an aspect of the present invention in order to solve the above-mentioned problems and achieve the purpose, there is provided a motor including: a motor rotor including a rotor yoke and a plurality of magnets arranged on an outer circumference of the rotor yoke in a circumferential direction of the rotor yoke; and a motor stator including an annularly arranged stator core and an excitation coil that excites the stator core on an outer side in a radial direction of the rotor yoke, wherein the outer circumference of the rotor yoke includes a convex portion projecting outward in the radial direction of the rotor yoke and a concave portion between convex portions adjacent to each other in the circumferential direction, and each of the magnets is arranged on a surface of the concave portion.

With this configuration, it is possible to improve a salient pole ratio between d-axis inductance and q-axis inductance and utilize reluctance torque. Torque ripple is suppressed and controllability of the motor is improved.

It is preferable that the convex portion includes at least one magnetic gap that penetrates through the rotor yoke in an axial direction parallel to an axis of a rotational center of the motor rotor, and that has magnetic permeability lower than that of the rotor yoke. With this configuration, it is possible to improve the salient pole ratio between the d-axis inductance and the q-axis inductance.

It is preferable that a curvature center of an outer diameter in a radial direction of the magnet is displaced from the rotational center of the motor rotor. This structure contributes to reducing the torque ripple by controlling a flow of an outer diameter magnetic flux on the outer side in the radial direction of the magnet.

According to a preferred aspect, it is preferable that an outer end in a radial direction of the convex portion of the magnetic gap is curved as seen in an axial direction. With this structure, the magnetic flux as a q-axis of the convex portion is controlled to flow surrounding the end on the outer side in the radial direction of the convex portion.

According to a preferred aspect, it is preferable that the magnetic gap of the convex portion and the magnetic gap of the adjacent convex portion in the circumferential direction extend such that inner ends in the radial direction of the magnetic gaps are closer to each other than outer ends in the radial direction of the magnetic gaps, and include an interval serving as a magnetic path between the inner ends. With this structure, the magnetic flux is controlled to flow from the magnet toward the outer side in the radial direction of the q-axis of the convex portion in a surrounding manner.

According to a preferred aspect, it is preferable that the concave portion includes a linear slope portion as seen in the axial direction between the surface of the concave portion on which the magnet is arranged and an outermost circumference of the convex portion. With this structure, an air gap is provided in the circumferential direction on both ends of the magnet, so that it is possible to control the flow of the magnetic flux from the magnet toward the q-axis of the convex portion, thereby reducing torque variation.

According to a preferred aspect, it is preferable that at least a part of an edge in the axial direction of the magnetic gap includes an arc that is drawn using a virtual center closer to the stator core than the surface of the concave portion on which the magnet is arranged.

According to a preferred aspect, it is preferable that the magnetic gap includes a non-magnetic material. This structure can improve rigidity of the rotor yoke. As an aspect of the present invention, the magnetic gap may be an air gap. However, providing many air gaps in the rotor yoke might decrease the rigidity of the rotor yoke. Therefore, the magnetic gap may be filled with a non-magnetic material equivalent to air in terms of a magnetic circuit, thereby improving the rigidity of the rotor yoke.

According to a preferred aspect, it is preferable that the motor described above is used for an electric power steering for obtaining auxiliary steering torque. Further, according to a preferred aspect, it is preferable that an electric power steering device is provided to obtain auxiliary steering torque by the motor. Furthermore, according to a preferred aspect, it is preferable that a vehicle including the motor is provided.

With the above-described configuration, even the motor that uses fewer magnets or the motor in which rare-earth magnetic components of the magnet are decreased can obtain sufficient torque, thereby reducing a cost. Hysteresis loss when a magnetic domain generated in the stator core changes its direction is reduced. The hysteresis loss is considered a factor to increase loss torque when the motor runs idle. In other words, even when the motor suddenly stops, it is possible to suppress increase in loss torque (electromagnetic brake) at the time of idling of the motor rotor. Since the loss torque can be suppressed, the electric power steering device can be operated with less discomfort even when the auxiliary steering torque is transmitted to a steering person.

Advantageous Effects of Invention

According to the present invention, it is possible to provide a motor including a plurality of magnets arranged on an outer circumference of a rotor yoke in a circumferential direction thereof and capable of utilizing reluctance torque by improving a salient pole ratio that is a ratio between d-axis inductance and q-axis inductance, and an electric power steering device.

Brief Description of Drawings

FIG. 1 is a configuration diagram of an electric power steering device provided with a motor according to an embodiment of the present invention.
FIG. 2 is a front view illustrating an example of a deceleration device provided on the electric power steering device of the embodiment
FIG. 3 is a cross-sectional view schematically illustrating a configuration of the motor of the embodiment on a virtual plane including a central axis thereof.
FIG. 4 is a cross-sectional view schematically illustrating the configuration of the motor of the embodiment on a virtual plane orthogonal to the central axis thereof.
FIG. 5 is an explanatory diagram schematically illustrating a configuration of a motor rotor of the embodiment.
FIG. 6 is an explanatory diagram when the motor according to the embodiment is applied as a direct drive motor.
FIG. 7 is an explanatory diagram illustrating an evaluation example of the flow of magnetic flux according to the motor of the embodiment.
FIG. 8 is an explanatory diagram illustrating an evaluation example of the flow of the magnetic flux according to the motor of a comparative example.
FIG. 9 is an explanatory diagram illustrating an evaluation example of the flow of the magnetic flux according to the motor of the embodiment.
FIG. 10 is an explanatory diagram illustrating an evaluation example of the flow of the magnetic flux according to the motor of the comparative example.
FIG. 11 is an explanatory diagram illustrating an evaluation example of the flow of the magnetic flux according to the motor of the embodiment.
FIG. 12 is an explanatory diagram illustrating an evaluation example of the flow of the magnetic flux according to the motor of the comparative example.
FIG. 13 is an explanatory diagram illustrating an evaluation example of the flow of the magnetic flux according to the motor of the embodiment.
FIG. 14 is an explanatory diagram illustrating an evaluation example of the flow of the magnetic flux according to the motor of the comparative example.
FIG. 15 is a schematic diagram of a vehicle that comes with the electric power steering device including the motor according to the embodiment.

Description of Embodiments

A mode for carrying out the present invention (embodiment) is described in detail with reference to the drawings. The present invention is not limited by contents described in the following embodiment. A component easily conceived of by one skilled in the art and the substantially identical components are included in the components described hereinafter. Furthermore, the components described hereinafter may be appropriately combined with another.

(Electric Power Steering Device)

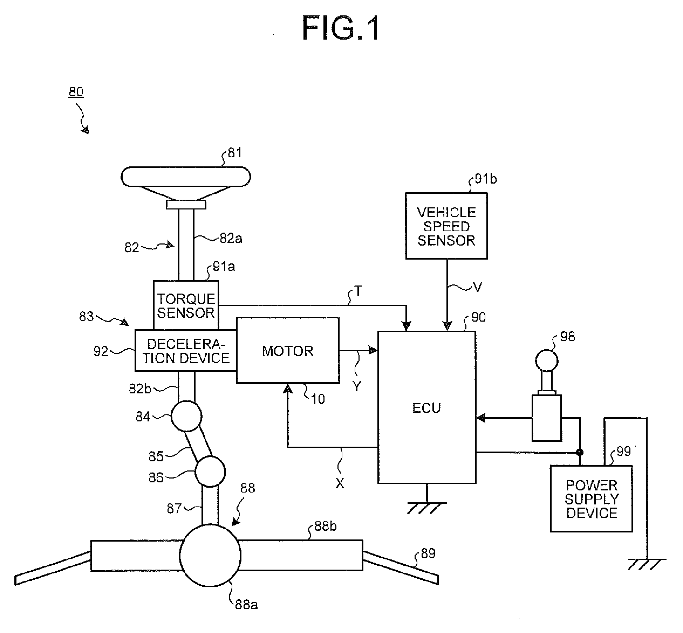

FIG. 1 is a configuration diagram of an electric power steering device provided with a motor according to an embodiment of the present invention. The following describes an outline of an electric power steering device 80 provided with a motor 10 according to the embodiment with reference to FIG. 1.

The electric power steering device 80 is provided with a steering wheel 81, a steering shaft 82, a steering force assisting mechanism 83, a universal joint 84, a lower shaft 85, a universal joint 86, a pinion shaft 87, a steering gear 88, and a tie rod 89 in order of transmission of force provided by a steering person. The electric power steering device 80 is provided with an ECU (electronic control unit) 90, a torque sensor 91a, and a vehicle speed sensor 91b.

The steering shaft 82 includes an input shaft 82a and an output shaft 82b. The input shaft 82a includes one end coupled to the steering wheel 81 and the other end coupled to the steering force assisting mechanism 83 through the torque sensor 91a. The output shaft 82b includes one end coupled to the steering force assisting mechanism 83 and the other end coupled to the universal joint 84. In the embodiment, the input shaft 82a and the output shaft 82b are formed of magnetic materials such as iron.

The lower shaft 85 includes one end coupled to the universal joint 84 and the other end coupled to the universal joint 86. The pinion shaft 87 includes one end coupled to the universal joint 86 and the other end coupled to the steering gear 88.

The steering gear 88 includes a pinion 88a and a rack 88b. The pinion 88a is coupled to the pinion shaft 87. The rack 88b meshes with the pinion 88a. The steering gear 88 is formed as a rack and pinion type. The steering gear 88 converts rotary motion transmitted to the pinion 88a into linear motion by the rack 88b. The tie rod 89 is coupled to the rack 88b.

The steering force assisting mechanism 83 includes a deceleration device 92 and the motor 10. The deceleration device 92 is coupled to the output shaft 82b. The motor 10 is coupled to the deceleration device 92 to generate auxiliary steering torque. Meanwhile, in the electric power steering device 80, a steering column is formed of the steering shaft 82, the torque sensor 91a, and the deceleration device 92. The motor 10 provides the auxiliary steering torque to the output shaft 82b of the steering column. In other words, the electric power steering device 80 of the embodiment is a column assist type.

In the column assist type electric power steering device 80, the steering person is located relatively close to the motor 10, so that torque change or frictional force of the motor 10 might affect the steering person. Therefore, the electric power steering device 80 is requested to reduce the frictional force of the motor 10.

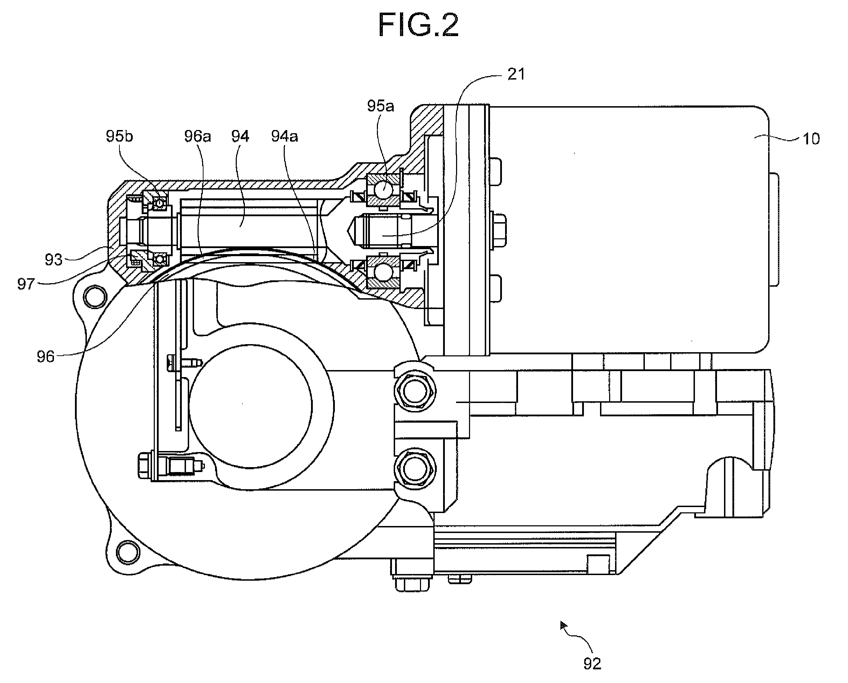

FIG. 2 is a front view illustrating an example of the deceleration device included in the electric power steering device of the embodiment. A part of FIG. 2 is a cross-sectional view. The deceleration device 92 is a worm deceleration device. The deceleration device 92 is provided with a deceleration device housing 93, a worm 94, ball bearings 95a and 95b, a worm wheel 96, and a holder 97.

The worm 94 is splined to a shaft 21 of the motor 10 or coupled thereto by elastic coupling. The worm 94 is rotatably held by the deceleration device housing 93 by the ball bearing 95a and the ball bearing 95b that is held by the holder 97. The worm wheel 96 is rotatably held by the deceleration device housing 93. A worm tooth 94a formed on a part of the worm 94 meshes with a worm wheel tooth 96a formed on the worm wheel 96.

Rotary force of the motor 10 is transmitted to the worm wheel 96 through the worm 94 to rotate the worm wheel 96. The deceleration device 92 increases the torque of the motor 10 by the worm 94 and the worm wheel 96. The deceleration device 92 provides the auxiliary steering torque to the output shaft 82b of the steering column illustrated in FIG. 1.

The torque sensor 91a illustrated in FIG. 1 detects steering force of a driver transmitted to the input shaft 82a through the steering wheel 81 as steering torque. The vehicle speed sensor 91b detects a travel speed of a vehicle that comes with the electric power steering device 80. The motor 10, the torque sensor 91a, and the vehicle speed sensor 91b are electrically connected to the ECU 90.

The ECU 90 controls operation of the motor 10. The ECU 90 obtains signals from the torque sensor 91a and the vehicle speed sensor 91b. In other words, the ECU 90 obtains steering torque T from the torque sensor 91a and obtains a travel speed V of the vehicle from the vehicle speed sensor 91b. The ECU 90 is supplied with power from a power supply device 99 (for example, in-vehicle battery) when an ignition switch 98 is turned on. The ECU 90 calculates an auxiliary steering command value of an assist command based on the steering torque T and the travel speed V. The ECU 90 adjusts a power value X supplied to the motor 10 based on the calculated auxiliary steering command value. The ECU 90 obtains information of an induced voltage from the motor 10 or obtains information of rotation of a rotor from a resolver to be described below as operational information Y.

The steering force of the steering person (driver) input to the steering wheel 81 is transmitted to the deceleration device 92 of the steering force assisting mechanism 83 through the input shaft 82a. At that time, the ECU 90 obtains the steering torque T input to the input shaft 82a from the torque sensor 91a and obtains the travel speed V from the vehicle speed sensor 91b. The ECU 90 controls the operation of the motor 10. The auxiliary steering torque generated by the motor 10 is transmitted to the deceleration device 92.

The steering torque T (including the auxiliary steering torque) output through the output shaft 82b is transmitted to the lower shaft 85 through the universal joint 84 and is further transmitted to the pinion shaft 87 through the universal joint 86. The steering force transmitted to the pinion shaft 87 is transmitted to the tie rod 89 through the steering gear 88 to steer a steering wheel. Next, the motor 10 is described.

(Motor)

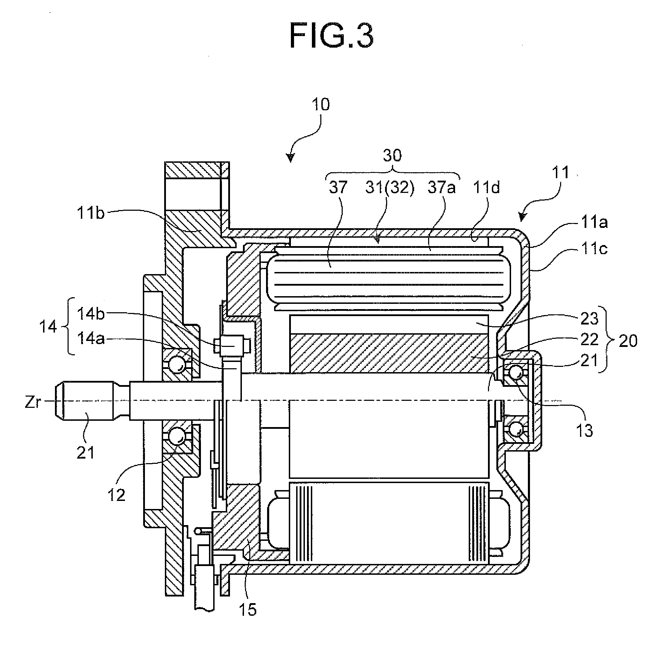

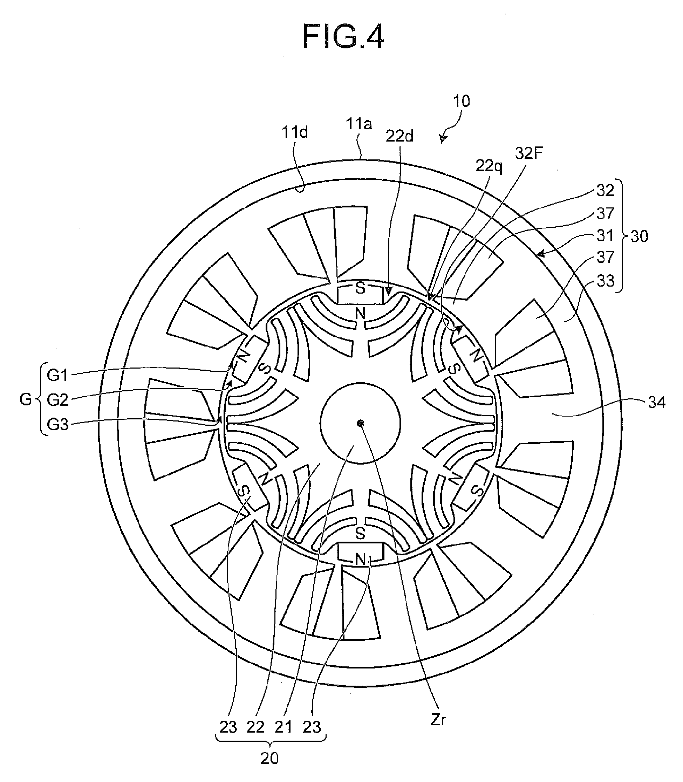

FIG. 3 is a cross-sectional view schematically illustrating a configuration of the motor of the embodiment on a virtual plane including a central axis thereof. FIG. 4 is a cross-sectional view schematically illustrating the configuration of the motor of the embodiment on a virtual plane orthogonal to the central axis thereof. As illustrated in FIG. 3, the motor 10 is provided with a housing 11, bearings 12 and 13, a resolver 14, a motor rotor 20, and a motor stator 30 for a brushless motor.

The housing 11 includes a cylindrical housing 11a and a front bracket 11b. The front bracket 11b is formed into a substantially disk shape and is attached to the cylindrical housing 11a so as to block one opening end of the cylindrical housing 11a. The cylindrical housing 11a includes a bottom 11c formed on an end thereof on a side opposite to the front bracket 11b so as to block the end. The bottom 11c is integrally formed with the cylindrical housing 11a, for example. A general steel material such as SPCC (steel plate cold commercial), electromagnetic soft iron, aluminum and the like may be employed, for example, as a material to form the cylindrical housing 11a. The front bracket 11b serves as a flange when the motor 10 is attached to a desired device.

The bearing 12 is provided inside the cylindrical housing 11a in a substantially central part of the front bracket 11b. The bearing 13 is provided inside the cylindrical housing 11a in a substantially central part of the bottom 11c. The bearing 12 rotatably supports one end of the shaft 21 being a part of the motor rotor 20 arranged inside the cylindrical housing 11a. The bearing 13 rotatably supports the other end of the shaft 21. As a result, the shaft 21 rotates around the axis of a rotational center Zr.

The resolver 14 is supported by a terminal block 15 provided on the front bracket 11b side of the shaft 21. The resolver 14 detects a rotational position of the motor rotor 20 (shaft 21). The resolver 14 is provided with a resolver rotor 14a and a resolver stator 14b. The resolver rotor 14a is attached to a circumferential surface of the shaft 21 by press-fitting and the like. The resolver stator 14b is arranged so as to oppose the resolver rotor 14a with a predetermined interval interposed therebetween.

The motor stator 30 is cylindrically provided inside the cylindrical housing 11a so as to enclose the motor rotor 20. The motor stator 30 is attached to an inner circumferential surface 11d of the cylindrical housing 11a by fitting, for example. The central axis of the motor stator 30 coincides with the rotational center Zr of the motor rotor 20. The motor stator 30 includes a cylindrical stator core 31 and an excitation coil 37. In the motor stator 30, the excitation coil 37 is wound around the stator core 31.

As illustrated in FIG. 4, the stator core 31 includes teeth 34. Nine teeth 34 are arranged in a circumferential direction in the embodiment. The stator core 31 is configured such that a plurality of core pieces having a substantially identical shape are stacked in an axial direction parallel to the axis of the rotational center Zr to be bundled. On an inner circumferential side of the tooth 34, a tooth tip 32 projects in the circumferential direction and an inner circumferential surface 32F of the tooth 34 opposes an outer circumference of a rotor yoke 22 with an interval of a gap G interposed therebetween. The stator core 31 is formed of a magnetic material such as an electromagnetic steel plate. The stator core 31 includes a back yoke 33 and the tooth 34. The back yoke 33 includes an arc-shaped portion. The back yoke 33 has an annular shape. The tooth 34 is a portion extending from an inner circumferential surface of the back yoke 33 toward the motor rotor 20.

The teeth 34 are arranged in the circumferential direction around the rotational center Zr (direction along the inner circumferential surface 11d of the cylindrical housing 11a illustrated in FIGS. 3 and 4) at regular intervals. Hereinafter, the circumferential direction around the rotational center Zr is simply referred to as the circumferential direction. The motor stator 30 is arranged inside the cylindrical housing 11a in an annular state by press-fitting the stator core 31 into the cylindrical housing 11a. Meanwhile, the stator core 31 and the cylindrical housing 11a may also be fixed to each other by bonding, shrink-fitting, welding or the like other than the press-fitting.

The excitation coil 37 illustrated in FIG. 4 is a linear wire. The excitation coil 37 is wound in a concentrated manner around an outer circumference of the tooth 34 through an insulator 37a (refer to FIG. 3). This configuration allows the number of magnetic poles to be reduced and a coil end to be shortened compared to that of distributed winding, thereby reducing a coil amount. As a result, the motor 10 can be made compact at a lower cost.

The excitation coil 37 may also be wound in a distributed manner around a plurality of outer circumferences of the teeth 34. This configuration allows the number of magnetic poles to be increased and magnetic flux distribution to be stabilized, thereby suppressing torque ripple.

The excitation coil 37 may also be wound in a toroidal manner around an outer circumference of the back yoke 33. This configuration allows the magnetic flux distribution equivalent to that of the distributed winding to be generated and the coil end to be shortened compared to that of distributed winding, thereby reducing the coil amount. As a result, the torque ripple can be suppressed and the motor 10 can be made compact.

The insulator 37a illustrated in FIG. 3 that is a member for insulating the excitation coil 37 from the stator core 31 is formed of a heat resistance member. The motor stator 30 has a shape to enclose the motor rotor 20. In other words, the stator core 31 is annularly arranged on an outer side in a radial direction of the rotor yoke 22 to be described below with a predetermined interval (gap) G interposed therebetween.

The motor rotor 20 is provided inside the cylindrical housing 11a so as to be rotatable around the rotational center Zr with respect to the cylindrical housing 11a. The motor rotor 20 includes the shaft 21, the rotor yoke 22, and a magnet 23. The shaft 21 is formed into a cylindrical shape. The rotor yoke 22 is formed into a cylindrical shape. Meanwhile, the rotor yoke 22 has an arc-shaped outer circumference. This configuration allows the number of process steps of a punching process of the rotor yoke 22 to be reduced compared to that when the outer circumference has a complicated shape.

The rotor yoke 22 is manufactured by stacking thin plates such as an electromagnetic steel plate and a cold rolled steel plate by means of bonding, boss, caulking and the like. The rotor yoke 22 is sequentially stacked in a mold to be discharged therefrom. The rotor yoke 22 is fixed to the shaft 21 by press-fitting the shaft 21 into a hollow portion of the rotor yoke 22, for example. Meanwhile, the shaft 21 and the rotor yoke 22 may also be formed in an integrated manner.

A plurality of magnets 23 are fixed on a surface of the rotor yoke 22 in the circumferential direction. The magnets 23 being permanent magnets are arranged at regular intervals in the circumferential direction of the rotor yoke 22 such that S poles and N poles are alternately arranged. According to this configuration, the number of poles of the motor rotor 20 illustrated in FIG. 4 is six, i.e., the N poles and the S poles alternately arranged in the circumferential direction of the rotor yoke 22 on a side of the outer circumference of the rotor yoke 22.

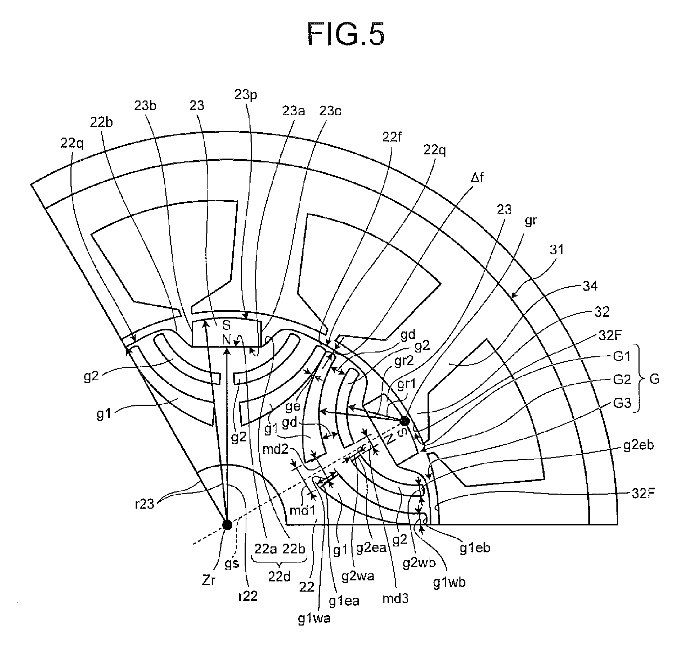

FIG. 5 is an explanatory diagram schematically illustrating a configuration of the motor rotor of the embodiment. As illustrated in FIGS. 4 and 5, the outer circumference of the rotor yoke 22 includes a convex portion 22q projecting outward in the radial direction of the rotor yoke 22 and a concave portion 22d between the convex portions 22q adjacent to each other in the circumferential direction. In this manner, the convex portions 22q and the concave portions 22d are alternately arranged on the outer circumference of the rotor yoke 22 in the circumferential direction.

The convex portion 22q includes through holes provided on the rotor yoke 22 as magnetic gaps g1 and g2 in the axial direction parallel to the rotational center Zr of the motor rotor 20 (hereinafter, referred to as the axial direction). The magnetic gaps g1 and g2 are air gaps penetrating through the rotor yoke 22 with magnetic permeability lower than that of the rotor yoke 22. The magnetic gaps g1 and g2 can inhibit or block magnetic flux from passing. The magnetic gaps g1 and g2 may also be filled with a non-magnetic material such as thermosetting resin to include the non-magnetic material. This structure can secure rigidity of the rotor yoke 22.

The magnet 23 is accommodated in the concave portion 22d of the rotor yoke 22 and attached thereto by magnetic force, for example. In the embodiment, the magnets 23 are a plurality of segmented magnets having split shapes (segmented structures) fixed on the surface of the rotor yoke 22 in the circumferential direction.

The magnet 23 has a so-called semi-cylindrical cross section in the axial direction. The concave portion 22d of the rotor yoke 22 includes an adhering surface 22a on which the magnet 23 is arranged and a slope portion 22b that is arranged between the adhering surface 22a and the convex portion 22q and that has a linear portion on the cross section in the axial direction. When the cross section in the axial direction of the magnet 23 includes an inner side surface 23a on the inner side in the radial direction, end faces 23b and 23c in the circumferential direction, and an outer side surface 23p on the outer side in the radial direction, the inner side surface 23a on the inner side in the radial direction is brought into surface contact with the adhering surface 22a. The adhering surface 22a has a curvature radius r22 around the rotational center Zr smaller than a curvature radius r23 of an arc in the circumferential direction of the maximum outer diameter surface of the convex portion 22q. The outer side surface 23p on the outer side in the radial direction has the curvature radius r23 equivalent to that of the arc in the circumferential direction of the maximum outer diameter surface of the convex portion 22q. Among the intervals of the gap G between the inner circumferential surface 32F of the tooth 34 and the outer circumference of the rotor yoke 22, a gap G2 is a space enclosed by the end faces 23b and 23c in the circumferential direction, the slope portion 22b, and the inner circumferential surface 32F of the tooth 34.

As illustrated in FIGS. 4 and 5, the magnet 23 magnetized so that the north pole is positioned on the outer circumference side of the rotor yoke 22 and the magnet 23 magnetized so that the south pole is positioned on the outer circumference side of the rotor yoke 22 are alternately arranged at regular intervals in the circumferential direction of the rotor yoke 22. In the magnet 23, a curvature of the outer side surface 23p on the outer side in the radial direction is different from that of the adhering surface 22a of the concave portion 22d.

The motor 10 according to the embodiment is provided with the magnetic gaps g1 and g2 on the convex portion 22q of the rotor yoke 22, so that difference in magnetic resistance occurs on the outer circumference of the rotor yoke 22. The magnetic gap g1 of the convex portion 22q and the magnetic gap g1 of the convex portion 22q adjacent thereto in the circumferential direction extend such that ends g1ea of the magnetic gaps g1 on the inner side in the radial direction are closer to each other as compared with ends g1eb of the magnetic gaps g1 on the outer side in the radial direction and include intervals md1 and md2 serving as a magnetic path between the ends g1ea on the inner side in the radial direction. The magnetic gap g2 of the convex portion 22q and the magnetic gap g2 of the convex portion 22q adjacent thereto in the circumferential direction extend such that ends g2ea of the magnetic gaps g2 on the inner side in the radial direction are closer to each other than ends g2eb of the magnetic gaps g2 on the outer side in the radial direction and the ends g2ea on the inner side in the radial direction include an interval md3 serving as the magnetic path. There is no magnetic gap g1 or gap g2 on a virtual line gs connecting the rotational center Zr and a part of the magnet 23, for example, a virtual reference point gr in the circumferential direction of the outer side surface 23p, so that the magnetic flux easily passes therethrough. The magnetic gap g2 of the convex portion 22q and the magnetic gap g2 of the convex portion 22q adjacent thereto in the circumferential direction are linearly symmetrical with respect to the virtual line gs. Similarly, the magnetic gap g1 of the convex portion 22q and the magnetic gap g1 of the convex portion 22q adjacent thereto in the circumferential direction are linearly symmetrical with respect to the virtual line gs. The above-described intervals md1, md2, and md3 become narrower in this order.

At least a part of an edge in the axial direction of the magnetic gap g1 includes an arc that is drawn using a virtual center (virtual reference point gr in the embodiment) positioned closer to the stator core 31 than the inner side surface 23a (concave portion surface) on which the magnet 23 is arranged, and a curvature radius gr1. At least a part of an edge in the axial direction of the magnetic gap g2 includes an arc that is drawn using the virtual center (virtual reference point gr in the embodiment) positioned closer to the stator core 31 than the inner side surface 23a (concave portion surface) on which the magnet 23 is arranged, and a curvature radius gr2. Therefore, in the rotor yoke 22, a distance gd between the magnetic gap g1 and the magnetic gap g2 becomes substantially constant and the magnetic flux flows in the rotor yoke 22 between the magnetic gap g1 and the magnetic gap g2.

The motor rotor 20 is provided with a bridge portion 22f through which the magnetic flux flows on the outer side in the radial direction of the magnetic gaps g1 and g2. In the magnetic gaps g1 and g2, the ends g1eb and g2eb on the outer side in the radial direction are curved as seen in the axial direction.

A thickness Δf in the radial direction of the bridge portion 22f is smaller than a width g1wb of the end g1eb on the outer side in the radial direction of the magnetic gap g1. Similarly, the thickness Δf in the radial direction of the bridge portion 22f is smaller than a width g2wb of the end g2eb on the outer side in the radial direction of the magnetic gap g2. This structure allows the magnetic resistance of an outer edge of the convex portion 22q to increase at the bridge portion 22f and thus allows the bridge portion 22f to limit the flow of the magnetic flux on the outer circumference of the convex portion 22q. By increasing the magnetic resistance at the thickness Δf in the radial direction of the bridge portion 22f, a short circuit of the magnetic flux flowing in the rotor yoke 22 (distance gd) between the magnetic gaps g1 and g2 adjacent to each other can be prevented. By increasing the magnetic resistance at the thickness Δf in the radial direction of the bridge portion 22f, it is possible to prevent a pathway to short-circuit the magnetic flux between the adjacent teeth 34.

The magnetic gap g1 is arranged closer to the rotational center Zr than the magnetic gap g2. In the magnetic gap g2, the width g2wb of the end g2eb on the outer side in the radial direction is about the same as a width g2wa of the end g2ea on the inner side in the radial direction. On the other hand, in the magnetic gap g1, a width g1wa of the end g1ea on the inner side in the radial direction is larger than the width g1wb of the end g1eb on the outer side in the radial direction.

The ends of the magnetic gaps g1 on the outer side in the radial direction extend in parallel to each other from the rotational center Zr outward in the radial direction with the magnetic path of a width ge remaining therebetween. In this manner, the magnetic path having the width ge remains between the ends of the magnetic gaps in the radial direction, and thus a magnetic body of the rotor yoke 22 is left between the magnetic gaps g1. The magnetic gap g1 of the embodiment is not limited to this mode, and may be configured such that the magnetic body of the rotor yoke 22 disappears between the adjacent magnetic gaps g1 at the ends on the outer side in the radial direction and the magnetic gaps are integrated with each other.

Therefore, the convex portion 22q and the magnet 23 are alternately arranged on the outer circumference of the rotor yoke 22. The magnet 23 that has a convex shape projecting outward in the radial direction of the rotor yoke 22 is a magnetic convex portion with large magnetic resistance and small inductance. The magnet 23 being the magnetic convex portion is referred to as a d-axis. A position at which a magnetic phase is different from the d-axis by 90 degrees in the electric angle is referred to as a q-axis. The convex portion 22q becomes a magnetic concave portion with small magnetic resistance and large inductance by magnetic path formation on both sides in the circumferential direction from the magnet 23. The gap G that is a predetermined interval between the stator core 31 and the rotor yoke 22 is changed in order of the gaps G1, G2, G3, G2, and G1 as the rotor yoke 22 rotates.

The magnet 23 is fixed on the surface of the rotor yoke 22, and a magnetic circuit is formed on the convex portion 22q by the magnetic gaps g1 and g2. According to this configuration, average torque Tt of the motor rotor 20 is addition of magnetic torque Tm of the magnet 23 and reluctance torque Tr generated by magnetic irregularity on the outer circumference of the rotor yoke 22 as represented by an equation (1) below. As a result, the average torque Tt generated in the motor rotor 20 improves even when the interlinkage magnetic flux between the stator core 31 and the rotor yoke 22 decreases.

$$Tt = Tr + Tm \quad \ldots \quad (1)$$

The motor 10 according to the embodiment is provided with the motor rotor 20 and the motor stator 30. The motor rotor 20 includes the rotor yoke 22 and a plurality of magnets 23 arranged on the outer circumference of the rotor yoke 22 in the circumferential direction of the rotor yoke 22. The motor stator 30 includes the annularly arranged stator core 31 and the excitation coil 37 that excites the stator core 31 on the outer side in the radial direction of the rotor yoke 22. The outer circumference of the rotor yoke 22 includes the convex portion 22q projecting outward in the radial direction of the rotor yoke 22 and the concave portion 22d between the convex portions 22q adjacent to each other in the circumferential direction. The magnet 23 is arranged on the adhering surface 22a that is the surface of the concave portion 22d, and the convex portion 22q is provided with at least one of the magnetic gaps g1 and g2 having the magnetic permeability lower than that of the rotor yoke 22 penetrating through the rotor yoke 22 in the axial direction.

This structure allows the reluctance torque to act and q-axis inductance to increase, thereby increasing a salient pole ratio that is a ratio of the q-axis inductance to d-axis inductance. As a result, it becomes possible to secure the average torque Tt of the motor rotor 20 by using the reluctance torque even when the magnet torque generated by the magnet is small in the motor in which fewer magnets are used or rare-earth magnetic components of the magnet are decreased. In this manner, it is possible to obtain sufficient torque even with the motor in which the fewer magnets are used or the motor in which the rare-earth magnetic components of the magnet are decreased, thereby reducing cost. Further, it is possible to reduce hysteresis loss when a magnetic domain generated in the stator core changes its direction. The hysteresis loss is considered a factor to increase loss torque when the motor runs idle. In other words, even when the motor suddenly stops, it is possible to suppress increase in loss torque (electromagnetic brake) at the time of idling of the motor rotor. Since the loss torque can be suppressed, a steering person can operate the electric power steering device with less discomfort even when the auxiliary steering torque is transmitted to the steering person.

The electric power steering device 80 obtains the auxiliary steering torque by the above-described motor 10. In the electric power steering device 80, the motor 10 suppresses the loss torque, so that the steering person can operate the electric power steering device 80 with less discomfort.

Therefore, it is possible to realize the electric power steering device 80 with low vibration even when this is the column assist type. Although the column assist type is described as an example of the electric power steering device 80 of the embodiment, a pinion assist type and a rack assist type may be employed.

(Direct Drive Motor)

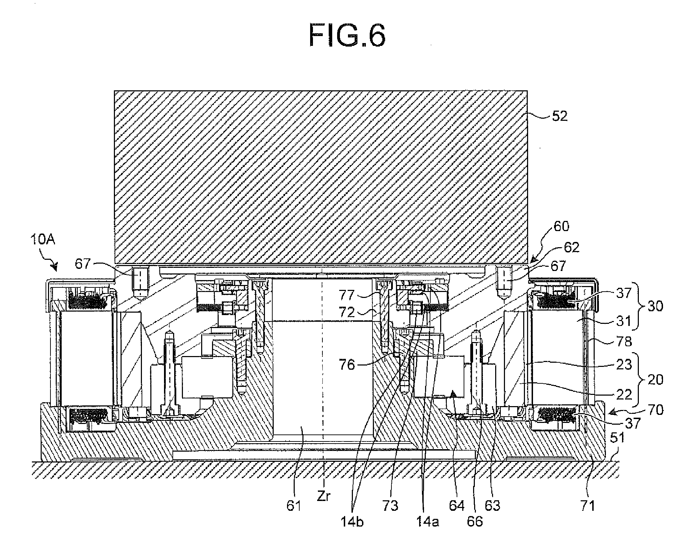

The motor of the embodiment can also be used as a direct drive motor that directly couples the motor rotor 20 to a load body rotated by the motor rotor 20. FIG. 6 is an explanatory diagram when the motor according to the embodiment is applied as the direct drive motor. Meanwhile, the same reference numeral is assigned to the same component as that described in the above-described embodiment and the description thereof is omitted.

As illustrated in FIG. 6, a motor 10A can directly transmit the rotary force to a load body 52 without intervention of a transmitting mechanism such as a gear, a belt, or a roller to rotate the load body 52. The motor 10A is a so-called direct drive motor that directly couples a motor rotary shaft 60 to the load body 52 with a fixing member 67 such as a bolt.

The motor 10A includes the motor stator 30 maintained in a stationary state, the motor rotor 20 rotatably arranged with respect to the motor stator 30, a base member 70 that is attached to a supporting member 51 so as to fix the motor stator 30, the motor rotary shaft 60 that is fixed to the motor rotor 20 so as to be rotatable together with the motor rotor 20, and a bearing 64 that is interposed between the base member 70 and the motor rotary shaft 60 and that rotatably supports the motor rotary shaft 60 with respect to the base member 70.

Each of the base member 70, the motor rotary shaft 60, the motor rotor 20, and the motor stator 30 has an annular structure. The motor rotary shaft 60, the motor rotor 20, and the motor stator 30 are concentrically arranged around the rotational center Zr. In the motor 10A, the motor rotor 20 and the motor stator 30 are arranged in this order from the rotational center Zr outward. The motor 10A described above is called as an inner rotor type, and the motor rotor 20 is located closer to the rotational center Zr than the motor stator 30. In the motor 10A, the motor rotary shaft 60, the motor rotor 20, and the motor stator 30 are arranged on the base member 70.

The base member 70 is provided with a housing base 71 having a substantially disk-shape and a housing inner 72 through which a hollow portion 61 penetrates and that serves as a shaft center projecting in a convex manner from the housing base 71 so as to enclose the hollow portion 61. The housing inner 72 is fastened to the housing base 71 by means of a fixing member 77 such as a bolt. The base member 70 includes a housing flange 73 that fixes an inner ring of the bearing 64 to the housing base 71 by means of a fixing member 76 such as a bolt.

The motor stator 30 is fastened to an outer circumferential edge of the housing base 71 by means of a fixing member 78 such as a bolt. This configuration allows the motor stator 30 to be positioned so as to be fixed to the housing base 71. A central axis of the motor stator 30 coincides with the rotational center Zr of the motor rotor 20.

The motor stator 30 includes a cylindrical stator core 31 and an excitation coil 37. In the motor stator 30, the excitation coil 37 is wound around the stator core 31. Wiring (not illustrated) for supplying the power from the power supply is connected to the motor stator 30, and the power is supplied to the excitation coil 37 through the wiring.

The motor rotor 20 has a cylindrical shape in which an outer diameter of the motor rotor 20 is smaller than an inner diameter dimension of the motor stator 30. The motor rotor 20 includes the rotor yoke 22 and the magnet 23 adhered to the outer circumference of the rotor yoke 22.

The motor rotary shaft 60 includes an annular rotary shaft 62 and a rotor flange 63 that fixes an outer ring of the bearing 64 to the rotary shaft 62 by means of a fixing member 66 such as a bolt. The motor rotor 20 is integrally fixed to the rotary shaft 62 of the motor rotary shaft 60 having a cylindrical shape. The motor rotor 20 may also be fixed to the rotary shaft 62 of the cylindrical motor rotary shaft 60 by a fixing member. A central axis of the annular rotary shaft 62 is coaxially formed with the rotational center Zr of the motor 10A.

The bearing 64 is configured such that the outer ring is fixed to the rotor flange 63 and the inner ring is fixed to the housing flange 73. This configuration allows the bearing 64 to rotatably support the rotary shaft 62 and the motor rotor 20 with respect to the housing base 71. Therefore, the motor 10A can rotate the rotary shaft 62 and the motor rotor 20 with respect to the housing base 71 and the motor stator 30.

The bearing 64 may also be a cross roller bearing in which a rolling element is a cross roller. Meanwhile, the bearing 64 is not limited to the cross roller bearing but may also be a ball bearing and a roller bearing in which the rolling element is a ball and a roller (cylindrical roller, conical roller, spherical roller and the like), for example. The rolling elements may also be arranged at a predetermined interval, for example, a regular interval, by placing the rolling elements one by one in pockets of an annular holder to be embedded between raceway surfaces in a state of being rotatably held in the pockets. This configuration allows the rolling elements to roll between the raceway surfaces while maintaining a predetermined interval such that rolling surfaces thereof are not brought into contact with one another. Increase in rotational resistance and burning due to friction by mutual contact of the rolling elements can be prevented.

The motor 10A is provided with a rotation detector. The rotation detector is a resolver, for example, and can detect the rotational position of the motor rotor 20 and the motor rotary shaft 60 with a high degree of accuracy. The rotation detector includes the resolver stator 14b maintained in the stationary state and the resolver rotor 14a arranged so as to oppose the resolver stator 14b with a predetermined gap interposed therebetween and to be rotatable with respect to the resolver stator 14b, and is arranged above the bearing 64.

The resolver stator 14b includes an annular laminated iron core in which a plurality of stator magnetic poles are formed at regular intervals in the circumferential direction and a resolver coil is wound around each stator magnetic pole. In the motor 10A of the embodiment, the resolver stator 14b is fixed to the housing inner 72.

The resolver rotor 14a is formed of a annular hollow laminated iron core and is fixed inside the motor rotary shaft 60. An arrangement position of the rotation detector is not especially limited as long as the rotation detector can detect the rotation of the motor rotor 20 (motor rotary shaft 60). The rotation detector may be arranged at an arbitrary position according to shapes of the motor rotary shaft 60 and the base member 70.

When the motor rotor 20 rotates, the motor rotary shaft 60 rotates together with the motor rotor 20 and the resolver rotor 14a also rotates along with this. This configuration allows reluctance between the resolver rotor 14a and the resolver stator 14b to continuously change. The resolver stator 14b detects reluctance change and converts the detected reluctance change to an electric signal (digital signal) by a resolver control circuit. A control device that controls the motor 10A can perform arithmetic processing of positions and rotational angles of the motor rotary shaft 60 and the motor rotor 20 that operate simultaneously with the resolver rotor 14a per unit time based on the electric signal of the resolver control circuit. As a result, the control device that controls the motor 10A can measure a rotational state (for example, rotational speed, rotational direction, or rotational angle) of the motor rotary shaft 60.

In this manner, the motor 10A is provided with a plurality of rotation detectors having different cycles of fundamental wave components of the reluctance change per one rotation of the motor rotor 20, which allows an absolute position of the motor rotary shaft 60 to be grasped and improves accuracy in measuring the rotational state (for example, rotational speed, rotational direction, or rotational angle) of the motor rotary shaft 60.

The housing base 71 is attached to the supporting member 51 so that the motor 10A is positioned so as to be fixed to the supporting member 51. The housing base 71 includes at least one continuous surface that is brought into contact with the attaching surface of the supporting member 51 in a state of being attached to the supporting member 51. This continuous surface can disperse the motor 10A's own weight and vibration at the time of the rotation on the supporting member 51. Therefore, this can lower a possibility that the housing base 71 is distorted (deflected).

As described above, the motor 10A can directly transmit the rotary force to the load body 52 without intervention of the transmitting mechanism. Therefore, when the load body 52 is rotated, the motor 10A can increase motor torque.

(Evaluation Example)

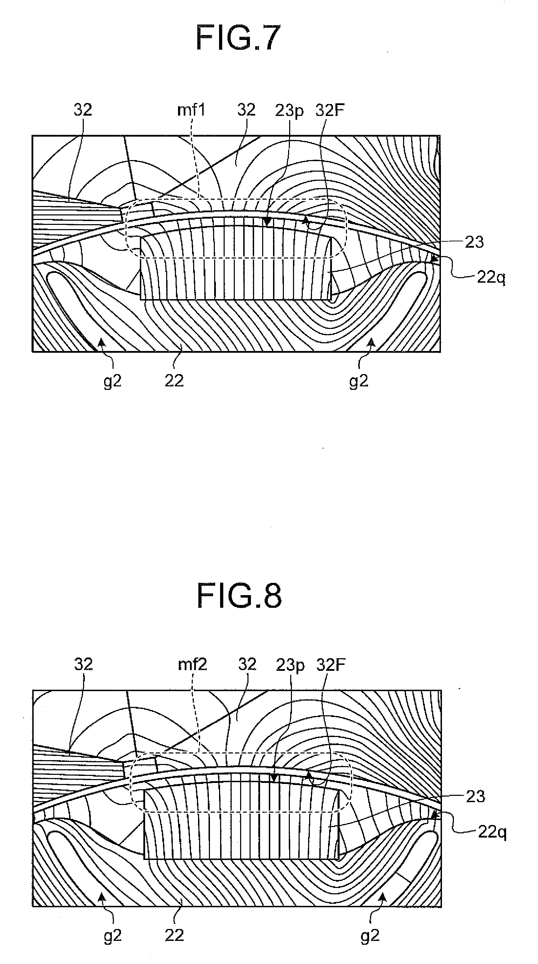

The flow of the magnetic flux according to the motor of the embodiment is hereinafter described in comparison with a comparative example with reference to FIGS. 7 to 14. In FIGS. 7 to 14, the component that is the same as that described in the above-described embodiment is assigned with the same reference numeral and is illustrated so as to be overlapped with the magnetic flux distribution, and , and the description thereof is omitted

FIG. 7 is an explanatory diagram illustrating an evaluation example of the flow of the magnetic flux according to the motor of the embodiment. FIG. 8 is an explanatory diagram illustrating an evaluation example of the flow of the magnetic flux according to the motor of the comparative example. In the rotor yoke 22 according to the embodiment, a curvature center of the outer side surface 23p on the outer side in the radial direction of the magnet 23 is displaced from the rotational center Zr of the motor rotor 20 as illustrated in FIG. 7. On the other hand, in the rotor yoke 22 according to the comparative example, the curvature center of the outer side surface 23p on the outer side in the radial direction of the magnet 23 coincides with the rotational center Zr of the motor rotor 20 as illustrated in FIG. 8. When comparison is made between an opposing area mf1 in which the inner circumferential surface 32F of the tooth 34 opposes the outer side surface 23p on the outer side in the radial direction of the magnet 23 illustrated in FIG. 7 and an opposing area mf2 in which the inner circumferential surface 32F of the tooth 34 opposes the outer side surface 23p on the outer side in the radial direction of the magnet 23 illustrated in FIG. 8, the magnetic flux distribution is more uniform in the area mf1 than in the area mf2. Therefore, the rotor yoke 22 according to the embodiment controls the magnetic flux as illustrated in FIG. 7 and controls the flow of the magnetic flux on the outer side surface 23p on the outer side in the radial direction of the magnet 23, thereby contributing to decrease in the torque ripple.

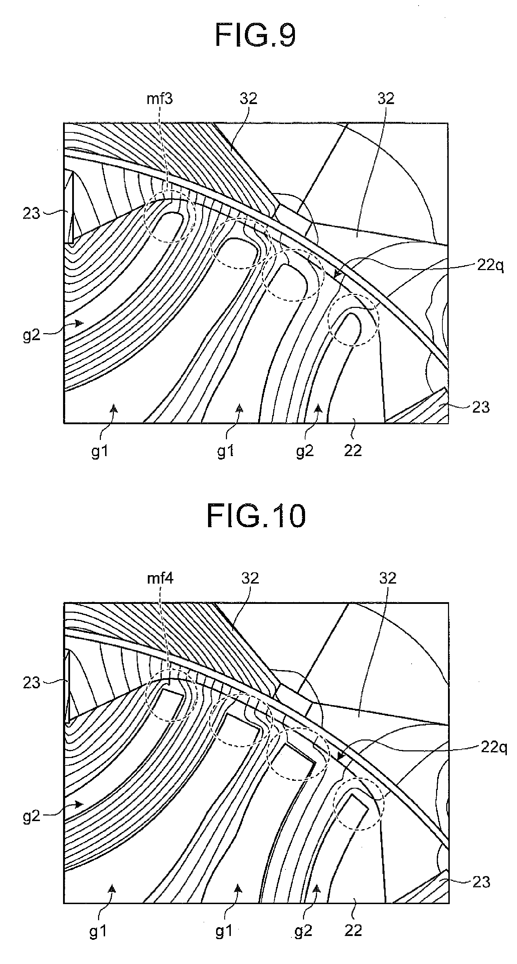

FIG. 9 is an explanatory diagram illustrating an evaluation example of the flow of the magnetic flux according to the motor of the embodiment. FIG. 10 is an explanatory diagram illustrating an evaluation example of the flow of the magnetic flux according to the motor of the comparative example. As illustrated in FIG. 9, in the rotor yoke 22 according to the embodiment, as illustrated in FIG. 9, the shapes of ends mf3 on the outer side in the radial direction of the convex portion 22q of the magnetic gaps g1 and g2 are curved as seen in the axial direction. On the other hand, as illustrated in FIG. 10, in the rotor yoke 22 according to the comparative example, the shapes of ends mf4 on the outer side in the radial direction of the convex portion 22q of the magnetic gaps g1 and g2 are linear as seen in the axial direction. On the ends mf3 on the outer side in the radial direction of the convex portion 22q of the magnetic gaps g1 and g2 according to the embodiment illustrated in FIG. 9, the magnetic flux is controlled to flow from the rotor yoke 22 toward the tooth 34 in a surrounding manner such that the magnetic flux proceeds more along the magnetic gaps g1 and g2 as compared with that on the ends mf4 on the outer side in the radial direction of the convex portion 22q of the magnetic gaps g1 and g2 according to the comparative example illustrated in FIG. 10.

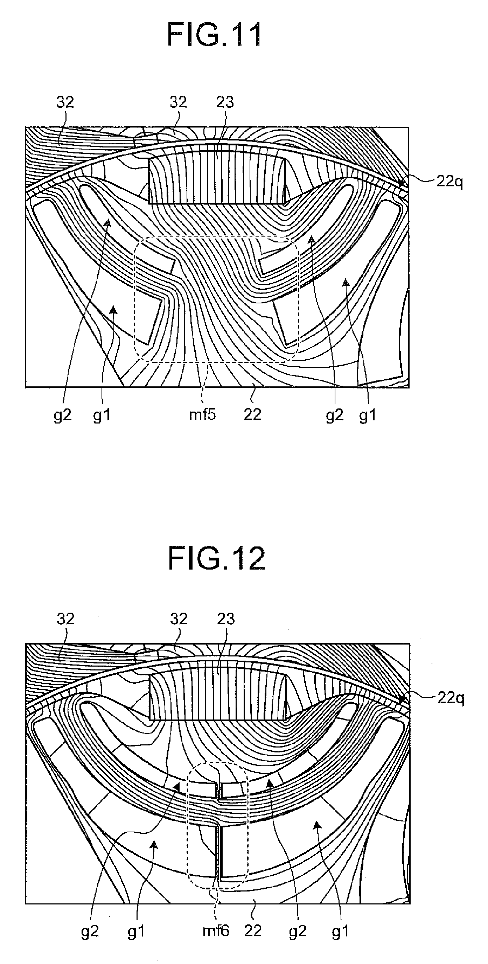

FIG. 11 is an explanatory diagram illustrating an evaluation example of the flow of the magnetic flux according to the motor of the embodiment. FIG. 12 is an explanatory diagram illustrating an evaluation example of the flow of the magnetic flux according to the motor of the comparative example. In the rotor yoke 22 according to the embodiment, as illustrated in FIG. 11, the magnetic gap g1 (g2) of the convex portion and the magnetic gap g1 (g2) of the convex portion adjacent thereto in the circumferential direction extend such that the ends of the magnetic gaps g1 (g2) on the inner side in the radial direction are closer to each other than those on the outer side in the radial direction, and the ends on the inner side in the radial direction have an interval therebetween in an area mf5 serving as a magnetic path. On the other hand, in the rotor yoke 22 according to the comparative example, the magnetic gap g1 (g2) of the convex portion and the magnetic gap g1 (g2) of the convex portion adjacent thereto in the circumferential direction extend such that the ends of the magnetic gap g1 (g2) on the inner side in the radial direction are closer to each other than those on the outer side in the radial direction, and the ends on the inner side in the radial direction are close to each other in an area mf6 as illustrated in FIG. 12. The magnetic resistance is higher in the area mf6 than in the area mf5, so that the magnetic flux is hard to flow from the magnet 23 toward the outer side in the radial direction of the q-axis of the convex portion from the magnet 23 in a surrounding manner. In the rotor yoke 22 according to the embodiment, the magnetic gaps g1 and g2 of the convex portion 22q and the magnetic gaps g1 and g2 of the convex portion 22q adjacent thereto in the circumferential direction extend such that the ends of the adjacent magnetic gaps g1 and g2 on the inner side in the radial direction are closer to each other than those on the outer side in the radial direction, and the ends on the inner side in the radial direction have an interval therebetween serving as a magnetic path, so that the magnetic flux is controlled to flow from the rotor yoke 22 toward the tooth 34 in a surrounding manner, i.e., from the magnet 23 to the outer side in the radial direction of the q-axis of the convex portion.

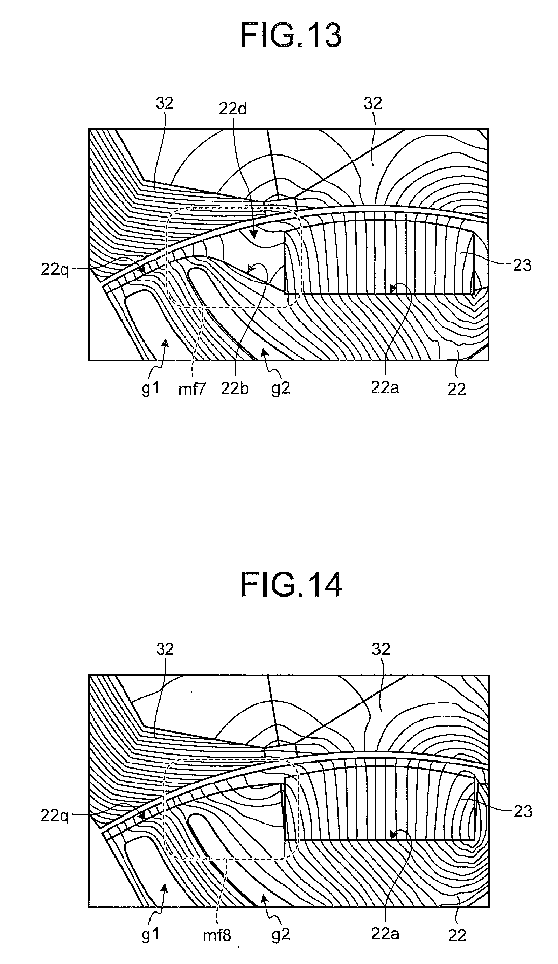

FIG. 13 is an explanatory diagram illustrating an evaluation example of the flow of the magnetic flux according to the motor of the embodiment. FIG. 14 is an explanatory diagram illustrating an evaluation example of the flow of the magnetic flux according to the motor of the comparative example. In the rotor yoke 22 according to the embodiment, the concave portion 22d includes the adhering surface 22a on which the magnet 23 is arranged and the slope portion 22b arranged between the adhering surface 22a and the convex portion 22q having a linear portion on the cross section in the axial direction as illustrated in FIG. 13. On the other hand, the rotor yoke 22 according to the comparative example does not have a structure corresponding to the slope portion 22b. The rotor yoke 22 according to the embodiment includes a larger air gap in an area mf7 in the circumferential direction of the magnet 23 than in an area mf8 in the circumferential direction of the magnet 23 according to the comparative example, and thus can increase density of the magnetic flux as the q-axis of the convex portion and prevent the short circuit of the magnetic flux at the end of the magnet 23, thereby controlling the flow of the magnetic flux.

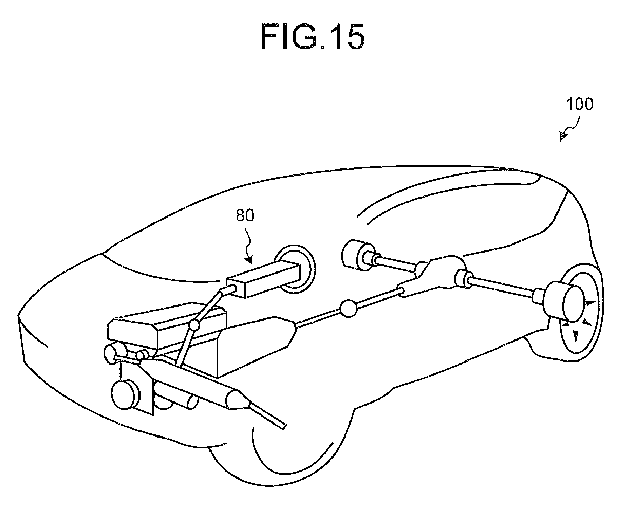

FIG. 15 is a schematic diagram of a vehicle that comes with the electric power steering device including the motor according to the embodiment. As illustrated in FIG. 15, a vehicle 100 comes with the electric power steering device 80 including the motor according to the embodiment described above. The vehicle 100 may also come with the motor according to the embodiment described above for use in other than the electric power steering device 80.

Reference Signs List

| | |
|---|---|
| 10, 10A | MOTOR |
| 11 | HOUSING |
| 11a | CYLINDRICAL HOUSING |
| 11d | INNER CIRCUMFERENTIAL SURFACE |
| 14 | RESOLVER |
| 20 | MOTOR ROTOR |
| 21 | SHAFT |
| 22 | ROTOR YOKE |
| 22a | ADHERING SURFACE |
| 22b | SLOPE PORTION |
| 22d | CONCAVE PORTION |
| 22f | BRIDGE PORTION |
| 22q | CONVEX PORTION |
| 23 | MAGNET |
| 23a | INNER SIDE SURFACE |
| 23b, 23c | END FACE |
| 23p | OUTER SIDE SURFACE |
| 30 | MOTOR STATOR |
| 31 | STATOR CORE |
| 32 | TOOTH TIP |
| 33 | BACK YOKE |
| 34 | TOOTH |
| 37 | EXCITATION COIL |
| 37a | INSULATOR |
| 52 | LOAD BODY |
| 60 | MOTOR ROTARY SHAFT |
| 61 | HOLLOW PORTION |
| 62 | ROTARY SHAFT |
| 63 | ROTOR FLANGE |
| 64 | BEARING |
| 70 | BASE MEMBER |
| 71 | HOUSING BASE |
| 72 | HOUSING INNER |
| 73 | HOUSING FLANGE |
| 80 | ELECTRIC POWER STEERING DEVICE |
| g1, g2 | MAGNETIC GAP |
| Zr | ROTATIONAL CENTER |

**Claims**

1. A motor comprising:

   a motor rotor including a rotor yoke and a plurality of magnets arranged on an outer circumference of the rotor yoke in a circumferential direction of the rotor yoke; and
   a motor stator including an annularly arranged stator core and an excitation coil that excites the stator core on an outer side in a radial direction of the rotor yoke, wherein
   the outer circumference of the rotor yoke includes a convex portion projecting outward in the radial direction of the rotor yoke and a concave portion between convex portions adjacent to each other in the circumferential direction, and each of the magnets is arranged on a surface of the concave portion.

2. The motor according to claim 1, wherein the convex portion includes at least one magnetic gap that penetrates through the rotor yoke in an axial direction parallel to an axis of a rotational center of the motor rotor, and that has magnetic permeability lower than that of the rotor yoke.

3. The motor according to claim 1 or 2, wherein a curvature center of an outer diameter in a radial direction of the magnet is displaced from the rotational center of the motor rotor.

4. The motor according to any one of claims 1 to 3, wherein an outer end in a radial direction of the convex portion of the magnetic gap is curved as seen in an axial direction.

5. The motor according to any one of claims 1 to 4, wherein the magnetic gap of the convex portion and the magnetic gap of the adjacent convex portion in the circumferential direction extend such that inner ends in the radial direction of the magnetic gaps are closer to each other than outer ends in the radial direction of the magnetic gaps, and include an interval serving as a magnetic path between the inner ends.

6. The motor according to any one of claims 1 to 5, wherein the concave portion includes a linear slope portion as seen in the axial direction between the surface of the concave portion on which the magnet is arranged and an outermost circumference of the convex portion.

7. The motor according to any one of claims 1 to 6, wherein at least a part of an edge in the axial direction of the magnetic gap includes an arc that is drawn using a virtual center closer to the stator core than the surface of the concave portion on which the magnet is arranged.

8. The motor according to any one of claims 1 to 7, wherein the magnetic gap includes a non-magnetic material.

9. The motor according to any one of claims 1 to 8 that is used for an electric power steering for obtaining auxiliary steering torque.

10. An electric power steering device that obtains auxiliary steering torque by the motor according to any one of claims 1 to 8.

11. A vehicle comprising the motor according to any one of claims 1 to 9.

# FIG.1

FIG.2

EP 3 098 941 A1

# FIG.3

# FIG.4

# FIG.5

# FIG.6

# FIG.7

# FIG.8

# FIG.9

# FIG.10

# FIG.11

# FIG.12

# FIG.13

# FIG.14

# FIG.15

## INTERNATIONAL SEARCH REPORT

| International application No. |
| --- |
| PCT/JP2015/051551 |

**A. CLASSIFICATION OF SUBJECT MATTER**
*H02K1/27*(2006.01)i, *H02K1/22*(2006.01)i, *H02K1/28*(2006.01)i

According to International Patent Classification (IPC) or to both national classification and IPC

**B. FIELDS SEARCHED**

Minimum documentation searched (classification system followed by classification symbols)
H02K1/27, H02K1/22, H02K1/28

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2011-103759 A  (Asmo Co., Ltd.),<br>26 May 2011 (26.05.2011),<br>paragraphs [0035] to [0041]; fig. 5<br>& US 2010/0308680 A1    & DE 102010020850 A1<br>& CN 101895161 A | 1-2,6<br>3-5,7-11 |
| Y | JP 2004-015880 A  (Hitachi, Ltd.),<br>15 January 2004 (15.01.2004),<br>paragraphs [0013] to [0014]; fig. 5<br>(Family: none) | 3-5,7-11 |
| Y | JP 2009-296685 A  (Denso Corp.),<br>17 December 2009 (17.12.2009),<br>paragraphs [0013], [0025]; fig. 1, 8<br>(Family: none) | 4-5,7-11 |

☒ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 09 April 2015 (09.04.15) | 21 April 2015 (21.04.15) |

| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |
| --- | --- |

Form PCT/ISA/210 (second sheet) (July 2009)

**INTERNATIONAL SEARCH REPORT**

International application No.

PCT/JP2015/051551

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 2003-061280 A (Yamaha Motor Co., Ltd.),<br>28 February 2003 (28.02.2003),<br>paragraphs [0014] to [0020]; fig. 1<br>& US 2003/0030343 A1    & EP 1283581 A2<br>& CN 1405948 A | 1-2,6<br>3-5,7-11 |
| A | JP 2014-007928 A (Daikin Industries, Ltd.),<br>16 January 2014 (16.01.2014),<br>paragraph [0033]; fig. 2<br>(Family: none) | 7-11 |

Form PCT/ISA/210 (continuation of second sheet) (July 2009)

**EP 3 098 941 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8331783 A